# EUROPÄISCHE PATENTANMELDUNG

(11) **EP 1 598 446 A2**
(43) Veröffentlichungstag der Anmeldung: **23.11.2005**
(21) Anmeldenummer: 05008456.5
(22) Anmeldetag: 19.04.2005
(51) Int. Cl.: C23F 13/04, G01N 17/02

(54) **Verfahren und Anordnung zum Erfassen von Wechselstromkorrosion an kathodisch geschützten Anlagen**

(30) Priorität: 19.05.2004 DE 102004025343
(71) Anmelder: E.ON Ruhrgas AG, 45138 Essen (DE); SGK Schweizerische Gesellschaft für Korrosionsschutz, 8005 Zürich (CH)
(72) Erfinder: Büchler, Marcus Dr., 8180 Bülach (CH); Schöneich, Hanns-Georg Dr., 47506 Neukirchen-Vluyn (DE)
(74) Vertreter: Harlacher, Mechthild

(57) **Zusammenfassung**

Eine Anordnung zum Erfassen von Wechselstromkorrosion an Abschnitten von kathodisch geschützten Anlagen weist eine erste Elektrode (1) und eine weitere Elektrode (3) auf. Ein Messwertaufnehmer (6) für eine elektrische Größe ist mit der ersten Elektrode (1) elektrisch gekoppelt. Zwischen der ersten Elektrode (1) und der zweiten Elektrode (3) befindet sich ein Elektrolyt (4), so dass die Elektroden (1, 3) in Elektrolytverbindung stehen. Zwischen der ersten Elektrode (1) und der zweiten Elektrode (3) ist eine Spannungsquelle (5) angeordnet, um an der ersten Elektrode (1) eine elektrochemische Reaktion einzuleiten. Es ist weiterhin eine Referenzelektrode (2) vorgesehen, die über den Elektrolyt (4) mit der ersten Elektrode (1) in Elektrolytverbindung steht. Die erste Elektrode (1) ist eine Abschnitt einer kathodisch geschützten Rohrleitung.

## Beschreibung

Die vorliegende Erfindung betrifft ein Verfahren und eine Anordnung zum Erfassen von Wechselstromkorrosion an kathodisch geschützten Anlagen, wobei ein zu untersuchender Abschnitt der Anlage ein korrodierbares Material enthält, welches beim Auftreten von Wechselstromkorrosion zu einem Korrosionsprodukt reagiert.

Durch kathodischen Korrosionsschutz werden, erdverlegte Rohrleitungen und andere Anlagen in korrosiver Umgebung, bekanntlich vor Korrosion geschützt. Durch induzierte Wechselspannung in den Anlagen kann es jedoch trotz kathodischen Korrosionsschutzes zu Wechselstromkorrosion kommen.

Die Kontrolle von erdverlegter Anlagen auf Korrosionsbefall ist problematisch. Dies liegt vor allem an der ungünstigen Zugänglichkeit der zu schützenden Anlagen. Es ist ein Verfahren zur Bestimmung des Rohrleitungs-Bodenpotentials an kathodisch geschützten Rohrleitungen bekannt, bei denen an verschiedenen Messpunkten entlang einer Rohrleitung eine Bezugselektrode über der Rohrleitung auf den Erdboden aufgesetzt wird (DE 100 21 994 A1 - Verfahren zur Bestimmung des Rohr/Bodenpotentials an kathodisch geschützten Rohrleitungen). Dieses Verfahren ist zur Detektion und quantitativen Erfassung von Wechselstromkorrosion jedoch nicht geeignet.

Für die Kontrolle des Korrosionszustandes von Rohrleitungen werden ferner Prüfstücke, sogenannte Coupons, im Bereich der Rohrleitung vergraben und elektrisch leitend mit dieser verbunden. Die Coupons sind meist beschichtete Stahlbleche mit einer Soll-Fehlstelle, in der Beschichtung. Letztere ist für den Korrosionszustand einer Fehlstelle in der benachbarten isolierten Rohrleitung repräsentativ. Messungen der Wechselstromdichte an dieser Soll-Fehlstelle ermöglichen Rückschlüsse auf das Auftreten von Wechselstromkorrosion. Durch das bekannte Verfahren ist jedoch nur eine momentane Erfassung der Wechselstromdichte möglich, nicht jedoch ein Bild über einen langfristig veränderlichen Korrosionszustandes der Rohrleitung zu gewinnen.

Ferner sind Potentialmessungen an den Coupons in Form von sogenannten Highspeed-Messungen bekannt. Die Coupons werden dazu von der Rohrleitung elektrisch entkoppelt, und das Potential des Coupons wird unmittelbar nach der Trennung gegen ein Standardpotential gemessen.

Sämtliche bekannten Verfahren erlauben keine Erfassung des Korrosionszustandes von realen Fehlstellen an Rohrleitungen.

Aufgabe der vorliegenden Erfindung ist es, eine Detektion und quantitative Erfassung von Wechselstromkorrosion an kathodisch geschützten Anlagen zu verbessern.

Ausgehend von einem Verfahren der eingangs genannten Art, wird diese Aufgabe erfindungsgemäß dadurch gelöst, dass aus einem Teil der kathodisch geschützten Anlage eine erste Elektrode gebildet wird, die eine Menge des Korrosionsproduktes enthält und die erste Elektrode über einen Elektrolyten mit wenigstens einer weiteren Elektrode in Elektrolytverbindung gebracht wird,
dass zwischen der ersten und der wenigstens einen weiteren Elektrode eine elektrische Spannung angelegt wird, um eine elektrochemische Reaktion einzuleiten,
wobei das Korrosionsprodukt der ersten Elektrode an der elektrochemischen Reaktion teilnimmt und zu einem Reaktionsprodukt umgesetzt wird,
dass der Ablauf der Reaktion durch Einstellen wenigstens einer elektrischen Größe an den Elektroden gesteuert wird,
dass wenigstens eine elektrische Messgröße aus einer aus Stromstärke, Potentialdifferenz und Ladung bestehenden Messgrößengruppe erfasst wird, und
dass die Menge des in der Reaktion umgesetzten Korrosionsprodukts aus der wenigstens einen elektrischen Messgröße ermittelt wird.

Die Aufgabe wird erfindungsgemäß ferner durch eine Anordnung gemäß Anspruch 14 gelöst.

Die Auswahl der elektrischen Spannungsquelle kann nach den Umständen am Einsatzort und den gewünschten Messzeiten getroffen werden. Die Messgrößen müssen Rückschlüsse auf Art und/oder Menge des umgesetzten Korrosionsproduktes ermöglichen. Zu diesem Zweck können elektrische Strom- oder Spannungsquellen in Form eines Galvanostaten, eines Potentiostaten, einer Batterie oder eines Gleichstromnetzteils verwendet werden. Mit Hilfe eines Galvanostaten kann zum Beispiel ein Korrosionsprodukt bei einer vorgegebenen geregelten Stromstärke umgesetzt werden, wobei die zur Aufrechterhaltung der Stromstärke erforderliche Spannung gemessen wird. Aus der Stromstärke ist in Verbindung mit der Messzeit die geflossene Ladung zu ermitteln und bei Kenntnis der Art des Korrosionsproduktes durch coulometrische Berechnungen die Stoffmenge ermittelbar. Bei Kenntnis der aktiven Elektrodenfläche ist ferner eine flächenbezogene Stoffmenge oder flächenbezogene Ladungsmenge bestimmbar.

Alternativ kann eine vorgegebene Spannung an die Elektroden angelegt und die Stromstärke erfasst werden. Dadurch kann zum Beispiel die Reaktion auf die Umsetzung einer Art von Korrosionsprodukt beschränkt werden, dessen Umsetzungsspannung bekannt ist.

Es ist vorteilhaft, wenn zusätzlich zu der Erfassung der wenigstens einen elektrischen Messgröße eine Messzeit erfasst und die Menge des Korrosionsproduktes unter Berücksichtigung der Messzeit ermittelt wird.

Die Messzeit erlaubt weitere Auswertungen der elektrischen Messgröße. Beispielsweise kann zur Auswertung ein zeitlicher Messgrößenverlauf mit einer unter bekannten Bedingungen durchgeführten Referenzmessung verglichen werden. Ferner ist durch zeitliche Integration der gemessenen Stromstärke die Berechnung des Ladungsflusses möglich.

Bei Verwendung eines mit dem zu untersuchenden Rohrleitungsabschnitt zeitweise verbundenen Prüfstücks (Coupons) kann die Messung des im Prüfstück enthaltenen Korrosionsproduktes an dem Ort stattfinden, an dem der Coupon an der Anlage angeordnet (z.B. vergraben) ist. Der Coupon ist üblicherweise für den Zeitraum der Messung elektrisch von der Anlage getrennt. Der Coupon kann alternativ von dem Abschnitt der Anlage entfernt werden und in einem Messelektrolyten in einem Messaufbau vermessen werden.

In alternativer Verfahrensweise kann als erste Elektrode ein Abschnitt einer kathodisch geschützten Rohrleitung verwendet werden. Die elektrochemische Reaktion findet dabei nicht an einer künstlichen Fehlstelle, sondern an einer realen Fehlstelle der Rohrleitung statt. Als Elektrolyt dient in diesem Fall üblicherweise das die Rohrleitung umgebende Medium (z.B. Erdreich, See- bzw. Meerwasser).

Vorzugsweise werden zum Steuern der elektrochemischen Reaktion drei Elektroden in einem elektrochemischen Drei-Elektroden-Aufbau mit Arbeits-, Gegen- und Referenzelektrode verwendet, wobei zwischen der Arbeitselektrode und der Referenzelektrode eine elektrische Potentialdifferenz gemessen wird.

Ein derartiger Messaufbau ist aus der physikalischen Chemie bzw. Elektrochemie bekannt. Die drei Elektroden werden derart gekoppelt, dass die Referenzelektrode in Elektrolytverbindung mit der Arbeitselektrode steht und zwischen diesen beiden Elektroden eine elektrische Potentialdifferenz gemessen wird. Da die Verbindung zwischen Arbeitselektrode und Referenzelektrode üblicherweise stromlos bleibt, ist diese Messung nicht durch Stromfluss beeinflußt. Ein Stromfluss findet nur zwischen Arbeitselektrode und Gegenelektrode statt. Als Referenzelektrode können handelsüblich verfügbare Referenz- bzw. Bezugselektroden verwendet werden, wie zum Beispiel Ag/AgCl oder Cu/CuSO₄.

Vorzugsweise wird in wenigstens einer Teilreaktion der elektrochemischen Reaktion eine Oxidation von Fe²⁺ zu Fe³⁺ ausgeführt.

Da die Mehrzahl der kathodisch geschützten Anlagen Eisen enthält, wird beim Auftreten von Wechselstromkorrosion oft metallisches Eisen zu zweiwertigen Eisen-Ionen oxidiert. In der Umgebung von erdvergrabenen kathodisch geschützten Anlagen liegen üblicherweise alkalische Bedingungen vor. Daher bildet sich aus den Eisen-Ionen schwerlösliches Eisenhydroxid, welches sich vor der Metalloberfläche ansammelt. In Gegenwart von Sauerstoff würde das zweiwertige Eisenhydroxid zum dreiwertigem Eisenhydroxid weiterreagieren; unter Einfluss des kathodischen Korrosionsschutzes ist diese Oxidationsreaktion jedoch meist unterbunden. Dies liegt einerseits daran, dass die Umgebung der Fehlstelle an Sauerstoff verarmt ist, da dieser durch den kathodischen Schutz reduziert wird; andererseits wird die Oxidation des zweiwertigen Eisenhydroxids durch den kathodischen Korrosionsschutz selbst unterbunden. An kathodisch geschützten Anlagen liegen folglich die Eisen-Ionen zumindest teilweise in zweiwertiger Form vor. Zur Detektion und Erfassung von Wechselstromkorrosion kann demnach der Nachweis von zweiwertigen Eisen-Ionen durch eine elektrochemisch gesteuerte Reaktion genutzt werden.

Die Arbeitselektrode mit der Fehlstelle wird durch Anlegen einer Spannung derart anodisch polarisiert, dass eine Oxidationsreaktion von vorhandenen zweiwertigen Eisen-Ionen zu dreiwertigen Eisen-Ionen erfolgt.

Es ist vorteilhaft, wenn ein Spannungsabfall im Elektrolyten zwischen der ersten und einer weiteren Elektrode durch Erfassen einer Polarisationspotentialdifferenz ermittelt und als Korrekturgröße verwendet wird.

In den meisten Fällen von erdvergrabenen Anlagen oder Rohrleitungen ist bei der Anwendung der Erfindung der Spannungsabfall im Elektrolyten bzw. dem Erdreich zu berücksichtigen. Eine Bestimmung des wahren Potentials der Arbeitselektrode ist aufgrund der Verfälschung durch diesen Spannungsabfall nicht immer direkt möglich. Es kann jedoch eine Korrekturgröße ermittelt werden, indem der Stromfluss zwischen Arbeitselektrode und Gegenelektrode unterbrochen wird und die Spannungsdifferenz zwischen Arbeitselektrode und Referenzelektrode unmittelbar nach dem Unterbrechen bestimmt wird.

Vorzugsweise wird ein Messzyklus ausgeführt, wobei zwischen der ersten und der wenigstens einen weiteren Elektrode für eine ersten Zeitdauer eine Spannung angelegt wird, und danach die Verbindung zwischen der ersten und der wenigstens einen weiteren Elektrode für eine zweite Zeitdauer getrennt und die Polarisationspotentialdifferenz ermittelt wird.

Typische Zeitteilungen für einen Messzyklus betragen zwei bis zehn, z.B. fünf Sekunden Stromfluss zwischen Arbeitselektrode und Gegenelektrode und 0.1 bis 2 Sekunden Unterbrechung. Die Messung der Polarisationspotentialdifferenz, also die so erfasste Spannung zwischen Arbeitselektrode und Referenzelektrode, erfolgt beispielsweise zwischen 10 ns und 1 s nach Unterbrechen des Stromflusses.

Es ist vorteilhaft, wenn der Messzyklus periodisch ausgeführt wird.

In Weiterbildung der Erfindung wird wenigstens eine Hilfselektrode von der ersten Elektrode beabstandet angeordnet und die Hilfselektrode über eine elektrische Spannungsquelle mit der ersten Elektrode derart elektrisch gekoppelt, dass eine elektrische Feldwirkung der ersten und der weiteren Elektrode auf einen begrenzten Abschnitt der kathodisch geschützten Anlage konzentriert wird.

Durch diese Weiterbildung kann sichergestellt werden, dass der Strom nur aus der zu untersuchenden Fehlstelle austritt und die Messung der Wechselstromkorrosion nur diese Fehlstelle berücksichtigt. Durch die Konzentration der elektrischen Feldwirkung mit einer Hilfselektrode wird gewährleistet, dass primär die Fehlstelle in der Rohrleitung polarisiert wird und weiter entfernte Fehlstellen nicht zum Messergebnis beitragen.

Vorzugsweise wird als Hilfselektrode eine die weitere Elektrode mit Abstand ringförmig umgebende Elektrode verwendet.

Die Hilfselektrode ist ringförmig um die weitere Elektrode herum angeordnet und begrenzt die elektrische Feldwirkung der zwischen der ersten und der weiteren Elektrode angelegten Spannung im wesentlichen auf den inneren Ringraum. Dadurch werden entfernte Fehlstellen der Anlage, die nicht durch die Messung erreicht werden sollen, schwächer polarisiert und nehmen an der coulometrischen Erfassung des Korrosionsproduktes an der Fehlstelle nicht teil.

Weitere vorteilhafte Ausführungen der Erfindung ergeben sich aus den Unteransprüchen.

Im folgenden wird die Erfindung anhand der beiliegenden Zeichnungen näher erläutert. In den Zeichnungen zeigt:
Figur 1 eine schematische Darstellung eines prinzipiellen Messaufbaus eines Ausführungsbeispiels der Erfindung;
Figur 2 ein Diagramm coulometrischer Messreihen zur Erfassung der Wechselstromkorrosion an Coupons unter Verwendung des Messaufbaus gemäß Figur 1;
Figur 3 ein Diagramm coulometrischer Langzeit-Messreihen zur Erfassung der Wechselstromkorrosion an einem erdvergrabenen Coupon;
Figur 4 eine schematische Darstellung eines abgewandelten Ausführungsbeispiels eines Messaufbaus für die Messung von Wechselstromkorrosion an einer Rohrleitung;
Figur 5 eine schematische Darstellung eines weiteren abgewandelten Ausführungsbeispiels der Erfindung.

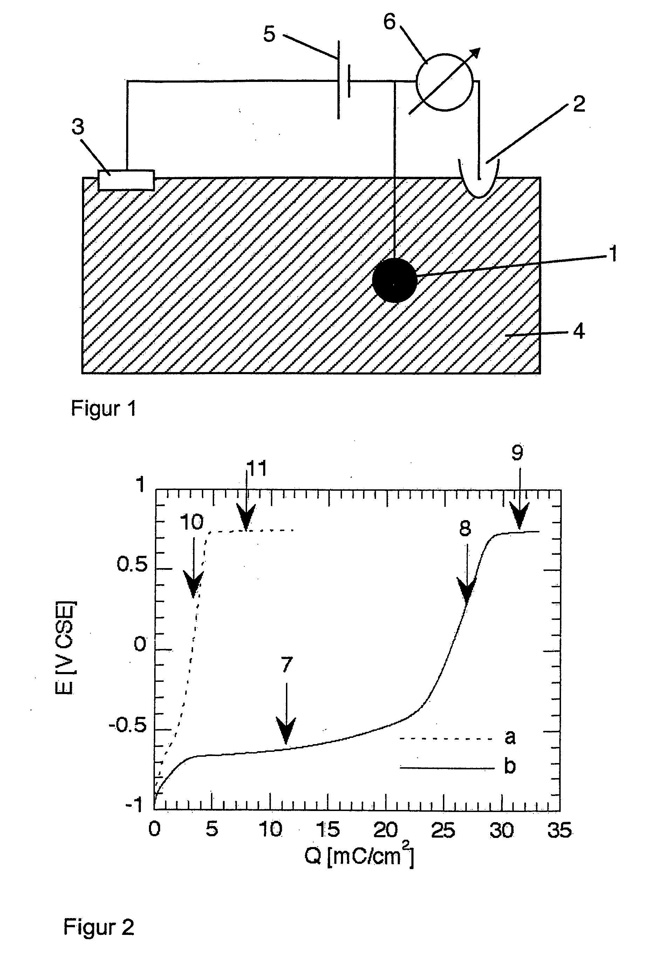

Figur 1 veranschaulicht ein einfaches Ausführungsbeispiel eines Messaufbaus zur Erfassung der Wechselstromkorrosion, wobei ein Drei-Elektroden-Aufbau verwendet wird. Eine Arbeitselektrode 1, eine Referenzelektrode 2 und eine Gegenelektrode 3 stehen über einen Elektrolyten 4 miteinander in Elektrolytverbindung. Zwischen der Arbeitselektrode 1 und der Referenzelektrode 2 ist ein Messwertaufnehmer in Form eines Spannungsmessgeräts 6 angeordnet. Eine Spannungsquelle 5 ist einerseits mit der Arbeitselektrode 1 und andererseits mit der Gegenelektrode 3 verbunden. Eine Soll-Spannung bzw. Soll-Potentialdifferenz wird mittels der Spannungsquelle 5 zwischen der Arbeitselektrode 1 und der Referenzelektrode 2 angelegt. Dabei kommt es zwischen der Arbeitselektrode 1 und der Gegenelektrode 3 zu einem Stromfluss durch den Elektrolyten 4 und zu einer elektrochemischen Reaktion an der Arbeitselektrode 1 bzw. der Gegenelektrode 3. Die Gegenelektrode 3 kann als verzinkter Erdspieß ausgebildet sein, der in den den Elektrolyten bildenden Erdboden 4 getrieben wird. Stattdessen kann aber auch eine Rohrleitung oder ein Erdungssystem eines Gebäudes als Gegenelektrode verwendet werden. Vorzugsweise ist die Oberfläche der Gegenelektrode 3 bedeutend größer als die der Arbeitselektrode 1. Der Elektrolyt 4 kann aus Erdboden, Seewasser oder dergleichen bestehen.

Figur 2 zeigt in einem Diagramm die Messergebnisse coulometrischer Messungen von Korrosionsprodukten an Prüfstücken (Coupons). Die Messungen wurden mit einem in Figur 1 dargestellten Messaufbau vorgenommen. Die vermessenen Coupons hatten eine Fläche von ca. 1 cm² und wurden in einem Elektrolyten, der aus künstlichem Boden bestand, für sieben Tage gelagert. Dabei wurden die Coupons kathodisch geschützt und mit unterschiedlichen Wechselstromdichten beaufschlagt. Die Wechselstromdichte an Coupon (a) betrug 0 A/m² und an Coupon (b) 100 A/m². Vor der Messung wurden die Coupons vom kathodischen Schutz und der Wechselstromquelle getrennt. Für die Messung wurde mit Hilfe eines Galvanostaten (Spannungsquelle 5) ein konstanter anodischer Strom von 100 µA zwischen dem als Arbeitselektrode 1 eingesetzten Coupon und der Gegenelektrode 3 eingeprägt. Die Potentialdifferenz wurde durch Spannungsmessung zwischen der Arbeitselektrode 1 und der Referenzelektrode 2 mit einem Voltmeter 6 bestimmt. Die Steuerung des Galvanostaten und die Erfassung des Polarisationspotentials erfolgte durch einen Rechner. Die Messdauer für Coupon (b) betrug 330 Sekunden. Aus dem im Diagram dargestellten Kurvenverlauf ist ersichtlich, daß das Potential mit zunehmendem Ladungsfluss zunächst ansteigt und in dem mit 7 bezeichneten Bereich eine geringere Potentialsteigung aufweist. In diesem Bereich erfolgt die Oxidation von zweiwertigen Eisen-Ionen zu dreiwertigen Eisen-Ionen. Bei zunehmenden Ladungsfluss wurde ein steiler, mit 8 bezeichneter Anstieg des Potentials beobachtet. Diese Potentialzunahme endet mit dem Einsetzen der Sauerstoffentwicklung bei 9. Mit weiterer Ladung bleibt das Potential nahezu konstant.

Im Potentialverlauf von Coupon (a) erfolgt der dem Anstieg 8 entsprechende und mit 10 bezeichneter Anstieg bei bedeutend kleineren Ladungsmengen. Die Sauerstoffentwicklung 11 erfolgt beim gleichen Potential wie bei Coupon (b). Nach der Messung wurden die Coupons optisch untersucht. Auf Coupon (a) wurden keinerlei Korrosionsangriffe gefunden, während Coupon (b) starke Korrosion zeigte. Die vom Ladungsfluss abhängige Lage des Beginns des steilen Anstiegs des Potentials ist bei dieser Messanordnung repräsentativ für die Menge oxidierten zweiwertigen Eisens und damit das Ausmaß der Wechselstromkorrosion an den Coupons. Ferner kann aus dem Einsatzpotential der Sauerstoffentwicklung 9 bzw. 11 eine Information über den pH-Wert gewonnen werden.

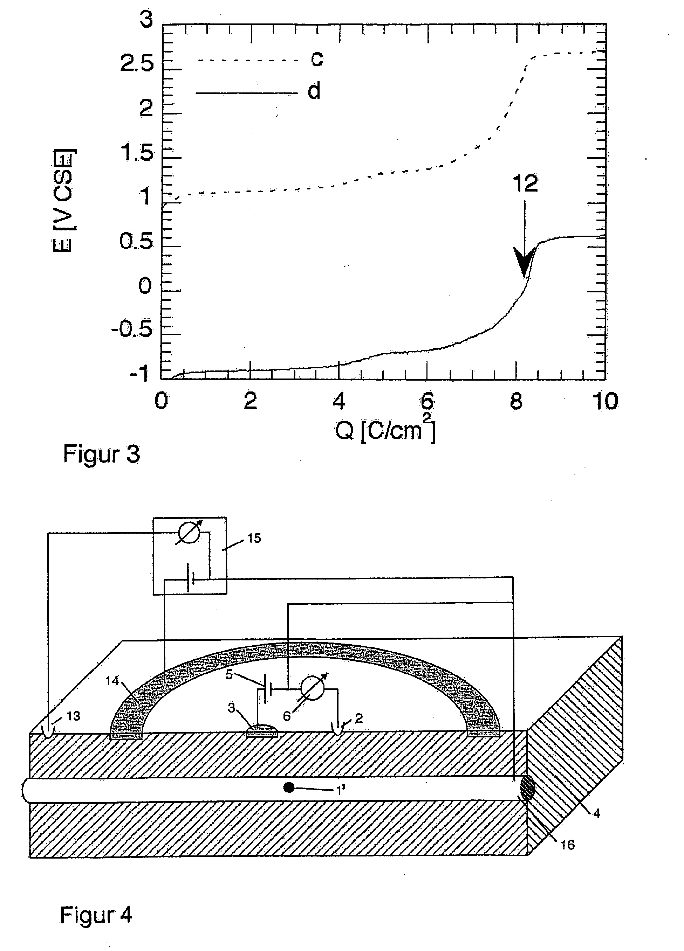

Figur 3 zeigt ein Diagramm der Messung einer Wechselstromkorrosion an einem erdvergrabenen Coupon, der 2,5 Jahre mit einer kathodisch geschützten Rohrleitung elektrisch verbunden und vergraben war. Die Wechselstromdichte am Coupon lag im Bereich von 120 A/m². Vor der Messung wurde die Verbindung des Coupons zur Rohrleitung unterbrochen. Für die Messung wurde ein anodischer Strom von 50 mA zwischen dem Coupon als Arbeitselektrode 1 und der Gegenelektrode 3 eines Galvanostaten 5 angelegt. Da der Spannungsabfall im Elektrolyten signifikant und zu berücksichtigen war, wurde der Strom in periodischen Abständen von 5 Sekunden für jeweils eine Sekunde unterbrochen. Die Potentialdifferenz zwischen der Arbeitselektrode 1 und der Referenzelektrode 2 wurde unmittelbar vor und nach dem Unterbrechen mit einem Voltmeter 6 bestimmt. Der Kurvenverlauf (c) gibt die jeweils vor der Unterbrechung aufgenommenen Potentialwerte wieder, während der Kurvenverlauf (d) die Potentialwerte nach dem Unterbrechen des Stroms zeigt. Der Kurvenverlauf (d), gebildet durch die Potentialwerte, die nicht durch den Elektrolytwiderstand beeinflusst sind, zeigt gute Übereinstimmung mit dem in Figur 2 gezeigten Potentialverlauf. Eine Unterbrechung des Stroms erlaubt die Bestimmung des Potentials des Coupons ohne störende Einflüsse des Spannungsabfalls im Elektrolyten.

Bei dem unter realen Bedingungen und für eine Dauer von 2,5 Jahren eingesetzten Coupons erforderte der mit 12 bezeichnete Anstieg des Potentials etwa 300 mal mehr Ladung als der Anstieg 8 aus Figur 2.

Wird der Coupon nach der Messung erneut mit der Rohrleitung verbunden, so wirkt der kathodische Schutz der Rohrleitung wieder auf den Coupon, und die im Verlauf der Messung oxidierten Eisen-Ionen werden wieder reduziert. Eine wiederholte Messung zu einem späteren Zeitpunkt ist mit guter Reproduzierbarkeit möglich. Das Verfahren ist für die wiederholte Messung des Korrosionszustandes an einem Coupon geeignet.

Figur 4 zeigt eine schematische Darstellung eines abgewandelten Ausführungsbeispiels eines Messaufbaus zur Erfassung der Wechselstromkorrosion an einer die erste Elektrode bildenden Fehlstelle 1' auf einer Rohrleitung 16. Die Fehlstelle 1', die Referenzelektrode 2 und die Gegenelektrode 3 befinden sich in Kontakt mit dem Elektrolyten 4 und stehen über diesen miteinander in Elektrolytverbindung. Eine Spannungsquelle 5 ermöglicht die Einstellung einer Spannung bzw. eines Stromes zwischen der Fehlstelle und der Fehlstelle 1' und der Gegenelektrode 3, und ein als Spannungsmessgerät ausgebildeter Messwertaufnehmer 6 nimmt die Spannung zwischen der Referenzelektrode 2 und der Fehlstelle 1' auf.

Aufgrund der unterirdischen Erstreckung der Rohrleitung 16 ist die Feld- bzw. Stromverteilung unbekannt. Es ist nicht auszuschließen, dass weitere Fehlstellen in der Rohrleitung 16 mit der Gegenelektrode 3 in Elektrolytverbindung stehen und zum Stromfluss beitragen.

Um die elektrische Feldwirkung auf einen Umgebungsbereich der zu untersuchende Fehlstelle 1' einzugrenzen, ist eine Hilfselektrode 14 über eine in einem Potentiostaten 15 angeordnete Spannungsquelle mit der Rohrleitung 16 gekoppelt. Mit dem Potentiostaten ist eine zweite Referenzelektrode 13 verbunden. Die Hilfselektrode 14 umgibt ringförmig die Gegenelektrode 3 und die Referenzelektrode 2. Die Hilfselektrode 14 ist ferner derart angeordnet, dass sich auch die Fehlstelle 1' in dem inneren Ringraum befindet, bei erdverlegten Anlagen jedoch meist unterhalb der Ringebene. Eine derartige ringförmige Elektrode wird auch als Guardring bezeichnet. Um die Feldwirkung auf den Bereich innerhalb des Guardrings zu beschränken, wird das Potential außerhalb des Rings mit die Referenzelektrode 13 gemessen und eine Spannung zwischen dem Guardring 14 und der Rohrleitung 16 derart gesteuert, dass das von der Referenzelektrode 13 gemessene Potential im wesentlichen konstant gehalten wird. Die zwischen dem Guardring 14 und der Rohrleitung 16 angelegte Spannung ruft einen widerstandsabhängigen Stromfluß hervor. Dieser entspricht dem Teilstrom, der von der Gegenelektrode 3 in entfernte Fehlstellen fließt. Der Guardring 14 kann aus einer einzelnen, flächigen Elektrode oder aus mehreren, untereinander verbundenen Elektroden gebildet sein.

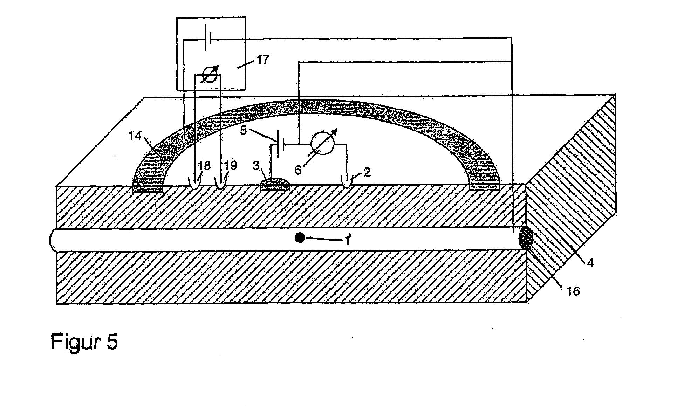

Figur 5 zeigt eine schematische Darstellung eines weiteren abgewandelten Ausführungsbeispiels der Erfindung. Mit zwei Referenzelektroden 18 und 19 wird ein Spannungsabfall im Elektrolyten 4 erfasst, der durch einen Stromfluß von der Gegenelektrode 3 zu entfernten Fehlstellen der Rohrleitung 16 verursacht wird. Ein Steuergerät 17 ist mit den Referenzelektroden 18 und 19 gekoppelt und steuert eine zwischen der als Guardring ausgebildeten Hilfselektrode 14 und der Rohrleitung 16 angelegte Spannung derart, dass die Spannung zwischen den Referenzelektroden 18 und 19 auf 0 V eingestellt wird. Dadurch wird die elektrische Feldwirkung auf einen Bereich innerhalb des Guardrings begrenzt.

Im Rahmen des Erfindungsgedankens sind weitere Abwandlungen möglich. Beispielsweise können als Hilfselektrode mehrere Einzelelektroden verwendet werden, die in geeigneter Weise in der Erstreckungsrichtung der Rohrleitung angeordnet werden, um die Feldwirkung zu beschränken. Ferner kann zur Erfassung der Korrosion jede beliebige elektrochemische Reaktion verwendet werden, bei der ein Korrosionsprodukt beteiligt ist. Im Rahmen der Erfindung kann auch eine coulometrische Erfassung einer Reduktion eines Korrosionsproduktes erfolgen. So kann die Menge an Korrosionsprodukten bei Vorliegen einer komplett oxidierten Oberfläche auch durch coulometrische Messung der Reduktion von Fe(III) zu Fe(II) bestimmt werden. Die Auswahl der Reaktion bzw. der vorgegebenen elektrochemischen Regelgrößen wird in Abhängigkeit von dem Material der kathodisch geschützten Anlage, sowie dem umgebenden Elektrolyten getroffen.

## Patentansprüche

1. Verfahren zum Erfassen von Wechselstromkorrosion an kathodisch geschützten Anlagen, wobei ein zu untersuchender Abschnitt der Anlage ein korrodierbares Material enthält, welches beim Auftreten von Wechselstromkorrosion zu einem Korrosionsprodukt reagiert,
**dadurch gekennzeichnet,**
**dass** aus einem Teil der Anlage eine erste Elektrode gebildet wird, die eine Menge des Korrosionsproduktes enthält,
**dass** die erste Elektrode über einen Elektrolyt mit wenigstens einer weiteren Elektrode in Elektrolytverbindung gebracht wird,
**dass** zwischen der ersten und der wenigstens einen weiteren Elektrode eine elektrische Spannung angelegt wird, um eine elektrochemische Reaktion einzuleiten,
wobei das Korrosionsprodukt der ersten Elektrode an der elektrochemischen Reaktion teilnimmt und zu einem Reaktionsprodukt umgesetzt wird,
wobei der Ablauf der Reaktion durch Einstellen wenigstens einer elektrischen Größe an den Elektroden gesteuert wird,
wobei wenigstens eine elektrische Messgröße aus einer aus Stromstärke, Potentialdifferenz und Ladung bestehenden Messgrößengruppe erfasst wird,
wobei die Menge des in der Reaktion umgesetzten Korrosionsproduktes aus der wenigstens einen Messgröße ermittelt wird.

2. Verfahren nach Anspruch 1, **dadurch gekennzeichnet**, das zusätzlich zu der Erfassung der wenigstens einen elektrischen Messgröße eine Messzeit erfasst und die Menge des Korrosionsproduktes unter Berücksichtigung der Messzeit ermittelt wird.

3. Verfahren nach Anspruch 1 oder 2, **dadurch gekennzeichnet, dass** als erste Elektrode ein mit dem zu untersuchenden Abschnitt zeitweise verbundenes Prüfstück (Coupon) verwendet wird.

4. Verfahren nach einem der Ansprüche 1 bis 3, **dadurch gekennzeichnet, dass** als erste Elektrode ein Abschnitt einer kathodisch geschützten Rohrleitung verwendet wird.

5. Verfahren nach einem der Ansprüche 1 bis 4, **dadurch gekennzeichnet, dass** die Spannung zwischen der ersten und der wenigstens einen weiteren Elektrode im wesentlichen konstant gehalten wird.

6. Verfahren nach einem der Ansprüche 1 bis 4, **dadurch gekennzeichnet, dass** die Stromstärke zwischen der ersten und der wenigstens einen weiteren Elektrode im wesentlichen konstant gehalten wird.

7. Verfahren nach einem der Ansprüche 1 bis 6, **dadurch gekennzeichnet, dass** zum Steuern der elektrochemischen Reaktion drei Elektroden in einem elektrochemischen Drei-Elektroden-Aufbau mit Arbeits-, Gegen- und Referenzelektrode verwendet werden, wobei zwischen der Arbeitselektrode und der Referenzelektrode eine elektrische Potentialdifferenz gemessen wird.

8. Verfahren nach einem der Ansprüche 1 bis 7, **dadurch gekennzeichnet, dass** in wenigstens einer Teilreaktion der elektrochemischen Reaktion eine Oxidation von Fe²⁺ zu Fe³⁺ oder eine Reduktion von Fe³⁺ zu Fe²⁺ ausgeführt wird.

9. Verfahren nach einem der Ansprüche 1 bis 8, **dadurch gekennzeichnet, dass** ein Spannungsabfall im Elektrolyt zwischen der ersten und einer weiteren Elektrode durch Erfassen einer Polarisationspotentialdifferenz ermittelt und als Korrekturgröße verwendet wird.

10. Verfahren nach Anspruch 9, **dadurch gekennzeichnet, dass** ein Messzyklus ausgeführt wird, wobei
zwischen der ersten und der wenigstens einen weiteren Elektrode für eine erste Zeitdauer eine Spannung angelegt wird, und danach
die Verbindung zwischen der ersten und der wenigstens einen weiteren Elektrode für eine zweite Zeitdauer getrennt und die Polarisationspotentialdifferenz ermittelt wird.

11. Verfahren nach Anspruch 10, **dadurch gekennzeichnet, dass** der Messzyklus periodisch ausgeführt wird.

12. Verfahren nach einem der Ansprüche 7 bis 11, **dadurch gekennzeichnet,**
**dass** wenigstens eine Hilfselektrode von der ersten Elektrode beabstandet angeordnet wird,
**dass** die Hilfselektrode über eine elektrische Spannungsquelle mit der ersten Elektrode elektrisch derart gekoppelt wird, dass eine elektrische Feldwirkung der ersten und der weiteren Elektrode auf einen begrenzten Abschnitt der kathodisch geschützten Anlage konzentriert wird.

13. Verfahren nach Anspruch 12, **dadurch gekennzeichnet,**
**daß** als Hilfselektrode eine die weitere Elektrode mit Abstand ringförmig umgebende Elektrode verwendet wird.

14. Anordnung zum Erfassen von Wechselstromkorrosion an Abschnitten von kathodisch geschützten Anlagen, mit
einer ersten Elektrode (1), wenigstens einer weiteren Elektrode (3) und einem Meßwertaufnehmer (6) für eine elektrische Größe, der mit wenigstens einer der beiden Elektroden (1,3) elektrisch gekoppelt ist,
wobei zwischen der ersten Elektrode (1) und der wenigstens einen weiteren Elektrode ein Elektrolyt (4) angeordnet ist, über den die Elektroden (1,3) in Elektrolytverbindung stehen,
**dadurch gekennzeichnet,**
**dass** zwischen der ersten Elektrode (1) und der wenigstens einen weiteren Elektrode (3) eine Spannungsquelle (5) vorgesehen ist, um wenigstens an der ersten Elektrode (1) eine elektrochemische Reaktion einzuleiten.

15. Anordnung gemäß Anspruch 14, **dadurch gekennzeichnet, dass** die erste Elektrode (1) ein mit dem Abschnitt der Anlage zeitweise verbundenes Prüfstück (Coupon) ist.

16. Anordnung gemäß Anspruch 14, **dadurch gekennzeichnet, dass** die erste Elektrode (1) ein Abschnitt einer kathodisch geschützten Rohrleitung (16) ist.

17. Anordnung gemäß einem der Ansprüche 14 bis 16, **dadurch gekennzeichnet, dass** als Spannungsquelle (5) ein elektrisches Gerät aus der aus einem Potentiostat, einem Galvanostat und einem Gleichstromnetzteil bestehenden Gruppe verwendet wird.

18. Anordnung gemäß einem der Ansprüche 14 bis 17, **dadurch gekennzeichnet, dass** eine Referenzelektrode (2) vorgesehen ist, die über den Elektrolyt (4) zu der ersten Elektrode (1) in Elektrolytverbindung steht.

19. Anordnung gemäß einem der Ansprüche 14 bis 18, **dadurch gekennzeichnet, dass** wenigstens eine Hilfselektrode (14) vorgesehen ist, die über eine elektrische Spannungsquelle (15) mit der ersten Elektrode (1) elektrisch gekoppelt ist, um eine elektrische Feldwirkung der ersten (1) und der weiteren Elektrode (3) auf einen begrenzten Abschnitt der kathodisch geschützten Anlage zu konzentrieren.

20. Anordnung gemäß einem der Ansprüche 14 bis 19, **dadurch gekennzeichnet, dass** die Hilfselektrode (14) ringförmig ausgebildet ist und mit Abstand um die weitere Elektrode (3) angeordnet ist.
